# EUROPÄISCHE PATENTSCHRIFT

(11) **EP 0 467 095 B1**
(45) Veröffentlichungstag und Bekanntmachung des Hinweises auf die Patenterteilung: **04.01.1995**
(21) Anmeldenummer: 91110285.3
(22) Anmeldetag: 21.06.1991
(51) Int. Cl.: B60H 1/24

(54) **Rückluftsperre**
Non-return air valve
Clapet anti-retour d'air

(30) Priorität: 20.07.1990 DE 4023190
(43) Veröffentlichungstag der Anmeldung: 22.01.1992
(73) Patentinhaber: TRW United-Carr GmbH & Co. KG, D-67677 Enkenbach-Alsenborn (DE)
(72) Erfinder: Kraus, Willibald, W-6718 Grünstadt (DE); Rückwardt, Hans-Werner, W-6719 Eisenberg (DE)
(74) Vertreter: Schieschke, Klaus, Dipl.-Ing.

(56) Entgegenhaltungen:
- EP-A- 0 154 140
- DE-C- 834 960
- DE-U- 8 902 504
- GB-A- 1 118 040
- US-A- 4 667 578

## Beschreibung

Die Erfindung bezieht sich auf eine Rückluftsperre für eine Einrichtung zur Entlüftung des Innenraumes eines Kraftfahrzeuges mit einem in einer Trägeröffnung befestigbaren Gehäuse, welches mit mindestens einer in Ruhestellung gegen ein Gitter anliegenden, direkt mit dem Gehäuse verbundenen Abschlußklappe verbunden ist.

Als Stand der Technik ist bereits eine derartige Rückluftsperre bekannt (DE-U-8902504), bei welcher konstruktiv offen gelassen ist, wie die Abschlußklappen an dem Gehäuse befestigt sind. Lediglich im Bereich des Gehäuserandes sind an allen vier Seiten zapfenartige Befestigungen vorgesehen, welche zur Anbringung der Abschlußklappen an dem Gehäuse dienen sollen.

Weiterhin ist eine Abschlußklappe bekannt (US-A-46 67 578), welche eine Zunge aufweist, die in eine Öffnung des Gehäuses einzustecken ist. Die Abschlußklappe weist ein Filmscharnier auf, hinter welchem sich ein Befestigungsbereich mit zwei Flanschen erstreckt, wobei zwischen diesen beiden Flanschen ein Bereich vorgesehen ist, welcher in einer Öffnung des Gehäuses eingelagert wird. Damit müssen zwei verschiedene Teile, nämlich das Gehäuse und der Abschlußflansch hergestellt werden, wonach dieser Abschlußflansch manuell mit dem Gehäuse zu verbinden ist, um eine komplette Rückluftsperre zu erhalten.

Zum Stand der Technik zählt weiterhin eine Rückluftsperre, welche so gestaltet ist, daß zur Unterbindung von Flattergeräuschen mehrere hakenartige Stege derart angebracht sind, daß in der Höhenlage, in welcher das Flattern beginnt, die Abschlußklappe das freie Ende mindestens eines Steges berührt (DE-A-37 09 244). Mit zunehmender Luftgeschwindigkeit knickt die Abschlußklappe im unteren Randbereich ein, schmiegt sich an die Stege an und wird in Winkelform gehalten. Diese bekannte Kontruktion ist bauaufwendig, wobei außerdem die gesamte Einheit nur eine ungenügende Stabilität aufweist.

Insbesondere in der Kraftfahrzeugindustrie besteht ein ständiges Bestreben, durch Reduzierung der Einzelteile zu einer weiteren Reduzierung der Kosten beizutragen, wobei außerdem die Qualität zu halten ist.

Entsprechend liegt der vorliegenden Erfindung die Aufgabe zugrunde, eine Rückluftsperre so auszubilden, daß sich neben einer erheblichen Vereinfachung in der Bauform bei Erhalt der Qualität auch eine verbilligte Herstellung ergibt.

Diese Aufgabe wird erfindungsgemäß dadurch gelöst, daß das Gehäuse und die Abschlußklappe als einstückige Einheit ausgebildet sind und daß das Gehäuse über mindestens ein Filmscharnier mit der Abschlußklappe verbunden ist. Damit ergibt sich insgesamt eine einstückige Einheit, so daß jegliche Montage der Abschlußklappe an dem Gehäuse entfällt.

Weiterhin besteht die Möglichkeit der Verwendung eines in das Gehäuse einsetzbaren, die Abschlußklappe zumindest im Randbereich abstützenden Innenrahmens. Dieser Innenrahmen kann das Gitter aufweisen, an welches die Abschlußklappe in Ruhestellung liegt.

Nach einem weiteren Merkmal der Erfindung kann die Rückluftsperre so gestaltet sein, daß das Gehäuse an einem äußeren Randbereich über mindestens ein zweites Filmscharnier mit der Abschlußklappe verbunden ist und daß die Abschlußklappe mindestens eine in einer Öffnung des Gehäuses einrastbare Rastnase aufweist.

Hierbei kann die Abschlußklappe weiterhin im Bereich der Rastnase eine in einen Zentriersteg des Gehäuses einlagerbaren Zentrierausnehmung aufweisen, an welche das erste Filmscharnier anschließt.

In weiterer Ausgestaltung der Erfindung kann das Gehäuse zumindest teilweise einen Auflageflansch für die Abschlußklappe, sowie außenseitig oder innenseitig einen umlaufenden Flansch mit mindestens einer Dichtlippe oder zwei einander gegenüberliegenden Dichtlippen aufweisen.

Eine zusätzliche Ausgestaltung der Erfindung ist gekennzeichnet durch einen umlaufenden Rahmen mit einzelnen Abschlußklappen, wobei die einzelnen Abschlußklappen jeweils über Filmscharniere mit dem umlaufenden Rahmen verbunden sind, welcher seinerseits über mindestens ein Filmscharnier, sowie Zapfen und Öffnungen an dem Gehäuse befestigt ist.

Die Erfindung wird nachfolgend anhand von in der Zeichnung dargestellten Ausführungsbeispielen näher beschrieben. In der Zeichnung zeigen:
- Fig. 1: eine Ausführungsform der Erfindung im Seiten schnitt.
- Fig. 2: die Draufsicht auf die Ausführungsform nach Fig. 1.
- Fig. 3: eine weitere Ausführungsmöglichkeit der Erfindung, teils gebrochen, teils geschnitten, in Seitenansicht.
- Fig. 4: die in Fig. 3 dargestellte Anordnung im eingebauten Zustand.
- Fig. 5: eine weitere Ausführungsform der Erfindung in Draufsicht.

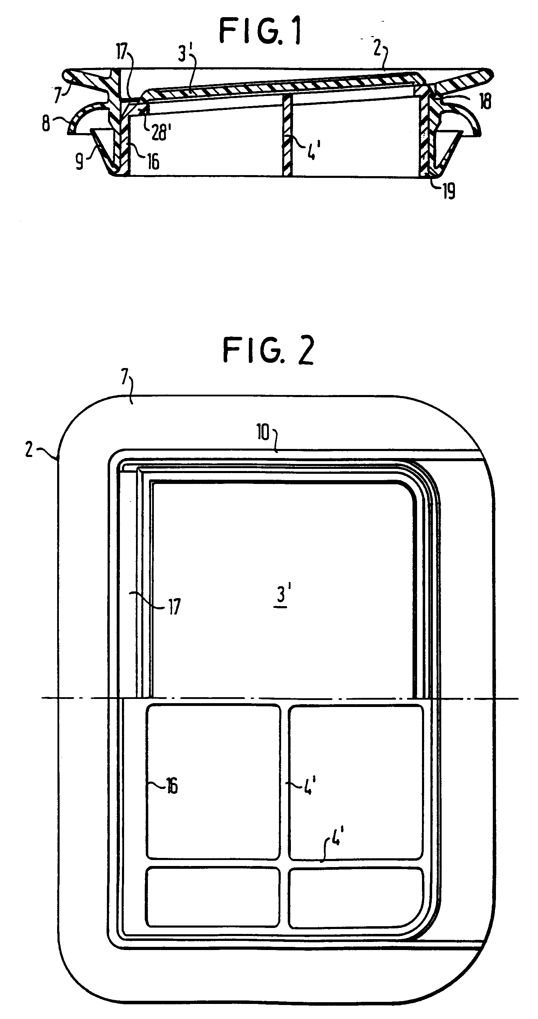

Fig. 1 und 2 beziehen sich auf eine erste Ausführungsform der Erfindung: Hier ist die Abschlußklappe 3' einstückig mit dem Gehäuse 2 ausgebildet, wobei im Klappbereich ein Filmscharnier 17 vorgesehen ist. Unterhalb dieser Abschlußklappe 3' befindet sich ein Innenrahmen 16, welcher mit dem Gehäuse 2 verriegelt ist, und zwar über eine Verrastung 18 im oberen Bereich, sowie einen Anschlag 19 im unteren Bereich des Gehäuses 2.

Dieser Innenrahmen 16 weist gleichzeitig das Gitter 4' auf. Der Innenrahmen hat hierbei die Aufgabe der Abstützung der Abschlußklappe 3, sowie die Erhöhung der Stabilität des Gehäuses 2. Entsprechend weist auch der Innenrahmen 16 einen Auflagerahmen 28' im Bereich des Filmscharniers 17 der Abschlußklappe 3 auf, welcher umlaufend ausgebildet sein kann.

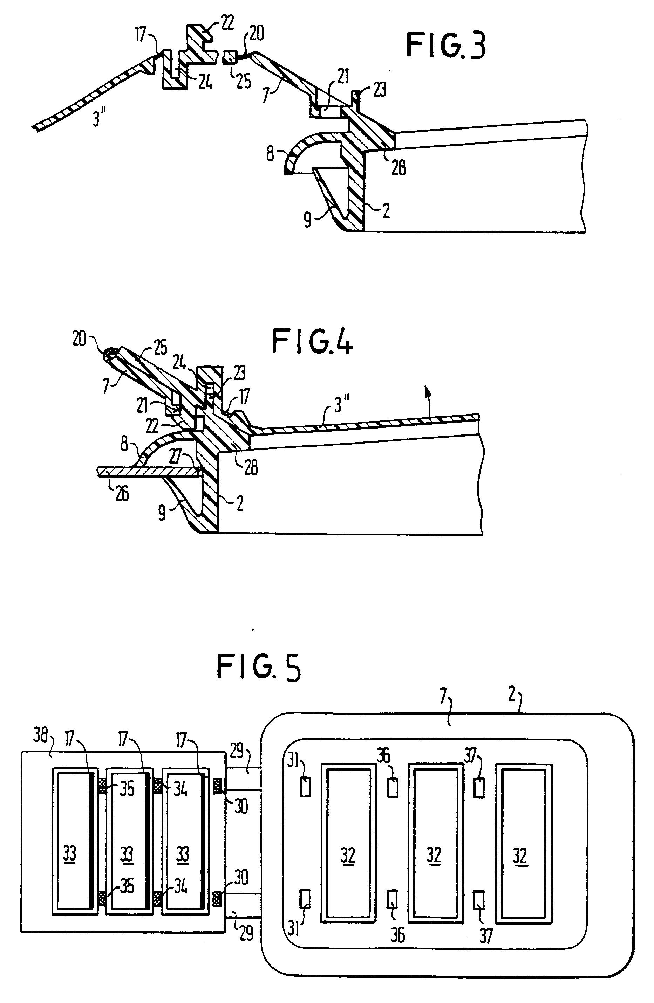

Die Ausführungsform nach Fig. 3 und 4 weist ebenfalls eine Einstückigkeit zwischen dem Gehäuse 2 und der Abschlußklappe 3'' auf. Fig. 3 stellt die geöffnete Bauform dar: Hier ist ersichtlich, daß der Rahmen 2 im Bereich des Flansches 7 eine Öffnung 21 sowie einen Zentriersteg 23 aufweist. Im oberen Bereich schließt sich an den Flansch 7 ein Filmscharnier 20 an, welches in ein Zwischenelement 25 übergeht. Dieses Zwischenelement endet in einer Rastnase 22, sowie in einer Zentrierausnehmung 24.

An die Zentrierausnehmung 24 schließt sich wiederum ein Filmscharnier 17 an, welches die Verbindung zur der Abschlußklappe 3'' herstellt.

Es besteht nun die Möglichkeit, die gesamte vorgenannte Einheit mit dem Zwischenelement 25 und der Abschlußklappe 3'' um das Filmscharnier 20 herumzuklappen (Fig. 4). Hier ist nun die Rastnase 22 in die Öffnung 21 eingerastet, wobei sich gleichzeitig der Zentriersteg 23 in der Zentrierausnehmung 24 einlagert. Parallel zu dem Flansch 7 liegt nunmehr bei umgeknicktem Filmscharnier 20 das Zwischenelement 25, so daß sich insgesamt eine Situation nach Fig. 4 ergibt, welche die Rückluftsperre in eingebauter Form zeigt.

Diese Rückluftsperre ist so in einem Träger 26 bzw. in dessen Öffnung 27 eingebaut, daß die beiden Dichtlippen 8 und 9 jeweils eine Fläche des Trägers 26 beaufschlagen. Damit ist der Einbauvorgang beendet und die Abschlußklappe 3'' kann um das Filmscharnier 17 in Pfeilrichtung aus der Ruhelage in eine Offenstellung schwenken.

Die Bauform nach Fig. 5 ist ähnlich der nach Fig. 4, jedoch für mehrere Abschlußklappen 33 gedacht. Diese Abschlußklappen 33 sind wiederum über Filmscharniere 17 an einem umlaufenden Rahmen 38 befestigt. Dieser Rahmen 38 ist über zwei Filmscharniere 29 mit dem Gehäuse 2 bzw. dessen Flansch 7 verbunden. Im Bereich der Filmscharniere 17 der einzelnen Abschlußklappen 33 befinden sich Zapfen 30, 34 und 35, welche im eingebauten Zustand in Öffnungen 31, bzw. 36 und 37 auf der Oberseite des Gehäuses 2 eingelagert sind; im eingebauten Zustand lagern sich die Zapfen 30 in die Öffnungen 31, die Zapfen 34 in die Öffnungen 36, sowie die Zapfen 36 in die Öffnungen 37. Hierbei sind wiederum die beiden Filmscharniere 29 umgebogen, so daß sich letztendlich eine montierte Stellung analog der nach Fig. 4 ergibt.
Hierbei liegen die Abschlußklappen 33 oberhalb von Ausnehmungen 32 des Gehäuses 2, so daß eine dreiteilige Einheit (mit drei Abschlußklappen vorliegt.

Es können bei allen Ausführungsformen damit erfindungsgemäß auch mehrere Abschlußklappen Anwendung finden, unter Beibehaltung der einfachen Bauform.

Die erfindungsgemäße Rückluftsperre weist eine einfache Bauform auf und ist entweder ein- oder zweistückig mit der Abschlußklappe bzw. den Abschlußklappen ausgebildet.

## Patentansprüche

1. Rückluftsperre für eine Einrichtung zur Entlüftung des Innenraumes eines Kraftfahrzeuges, mit einem in einer Trägeröffnung befestigbaren Gehäuse (2), welches mit mindestens einer in Ruhestellung gegen ein Gitter (4') anliegenden, direkt mit dem Gehäuse (2) verbundenen Abschlußklappe (3', 3'', 33) verbunden ist,
dadurch gekennzeichnet,
daß das Gehäuse (2) und die Abschlußklappe (3', 3'', 33) als einstückige Einheit ausgebildet sind und
daß das Gehäuse (2) über mindestens ein Filmscharnier (17) mit der Abschlußklappe (3', 3'', 33) verbunden ist.

2. Rückluftsperre nach Anspruch 1, gekennzeichnet durch einen in das Gehäuse (2) einsetzbaren, die Abschlußklappe (3') zumindest im Randbereich abstützenden Innenrahmen (16).

3. Rückluftsperre nach Anspruch 1 und 2, dadurch gekennzeichnet, daß der Innenrahmen (16) das Gitter (4') aufweist.

4. Rückluftsperre nach Anspruch 1, dadurch gekennzeichnet, daß das Gehäuse (2) an einem äußeren Randbereich über mindestens ein zweites Filmscharnier (20) mit der Abschlußklappe (3'') verbunden ist und daß die Abschlußklappe (3'') mindestens eine in einer Öffnung (21) des Gehäuses einrastbare Rastnase (22) aufweist.

5. Rückluftsperre nach Anspruch 4, dadurch gekennzeichnet, daß die Abschlußklappe (3'') im Bereich der Rastnase (22) eine in einen Zentriersteg (23) des Gehäuses (2) einlagerbaren Zentrierausnehmung (24) aufweist, an welche das erste Filmscharnier (17) anschließt.

6. Rückluftsperre nach einem der vorhergehenden Ansprüche, dadurch gekennzeichnet, daß das Gehäuse (2) außenseitig oder innenseitig einen umlaufenden Flansch (7) mit mindestens einer Dichtlippe oder zwei einander gegenüberliegendend Dichtlippen (8, 9) aufweist.

7. Rückluftsperre nach den vorhergehenden Ansprüchen, gekennzeichnet durch einen umlaufenden Rahmen (38) mit einzelnen Abschlußklappen (33), wobei die einzelnen Abschlußklappen (33) jeweils über Filmscharniere (17) mit dem umlaufenden Rahmen (38) verbunden sind, welcher seinerseits über mindestens ein Filmscharnier (29), sowie Zapfen (30, 34, 35) und Öffnungen (31, 36, 37) an dem Gehäuse (2) befestigt ist.

## Claims

1. Non-return air valve for a device for venting the interior of a motor vehicle, with a housing (2) which can be fastened in a support opening and is connected to at least one closing flap (3', 3'', 33), which bears in the rest position against a grating (4') and is connected directly to the housing (2), characterized in that the housing (2) and the closing flap (3', 3'', 33) are designed as a one-piece unit and in that the housing (2) is connected to the closing flap (3', 3'', 33) via at least one film hinge (17).

2. Non-return air valve according to Claim 1, characterized by an inner frame (16) which can be inserted into the housing (2) and supports the closing flap (3') at least in the edge region.

3. Non-return air valve according to Claim 1 and 2, characterized in that the inner frame (16) has the grating (4').

4. Non-return air valve according to Claim 1, characterized in that the housing (2) is connected at an outer edge region to the closing flap (3'') via at least one second film hinge (20), and in that the closing flap (3'') has at least one latching lug (22) which can be latched into an opening (21) of the housing.

5. Non-return air valve according to Claim 4, characterized in that in the region of the latching lug (22) the closing flap (3'') has a centring recess (24) which can be embedded in a centring web (23) of the housing (2) and to which the first film hinge (17) is connected.

6. Non-return air valve according to one of the preceding claims, characterized in that on the outside or on the inside the housing (2) has a peripheral flange (7) with at least one sealing lip or two sealing lips (8, 9) lying opposite each other.

7. Non-return air valve according to the preceding claims, characterized by a peripheral frame (38) with individual closing flaps (33), each of the individual closing flaps (33) being connected via film hinges (17) to the peripheral frame (38) which, for its part, is fastened to the housing (2) via at least one film hinge (29), as well as pegs (30, 34, 35) and openings (31, 36, 37).

## Revendications

1. Clapet anti-retour d'air pour un dispositif d'aération de l'habitacle d'un véhicule automobile, comprenant un réceptacle ou boîtier pouvant être fixé dans une ouverture de support, qui est relié avec au moins un clapet de fermeture s'appliquant contre une grille dans une position de repos et relié directement au boîtier
caractérisé en ce que le boîtier (2) et le clapet de fermeture (3', 3'', 33) sont constitués sous forme d'une unité d'un seul tenant et
le boîtier (2) est reliée au clapet de fermeture (3', 3'', 33) par au moins une charnière constituée par une membrane (17).

2. Clapet anti-retour d'air selon la revendication 1, caractérisé par un cadre interne (16) pouvant être monté dans le boîtier (2) et supportant le clapet de fermeture (3') au moins dans sa région de bord.

3. Clapet anti-retour d'air selon les revendications 1 et 2, caractérisé en ce que le cadre interne (16) comprend la grille (4').

4. Clapet anti-retour d'air selon la revendication 1, caractérisé en ce que le boîtier (2) est relié au clapet de fermeture (3'') dans une zone de bord externe par l'intermédiaire d'au moins une seconde charnière constituée par une membrane (20) et en ce que le clapet de fermeture (3'') comprend au moins une saillie d'arrêt (22) pouvant s'enclencher dans une ouverture (21) du boîtier.

5. Clapet anti-retour d'air selon la revendication 4, caractérisé en ce que le boîtier (2) comprend dans la zone de la saillie d'arrêt (22) une cavité de centrage (24) pouvant être constituée dans une nervure de centrage (23) du boîtier (2), cavité à laquelle est raccordée la première charnière formée par une membrane (17)

6. Clapet anti-retour d'air selon l'une quelconque des revendications précédentes, caractérisé en ce que le boîtier (2) comprend sur son côté extérieur ou sur son côté intérieur une bride périphérique (7) comportant au moins une lèvre d'étanchéité ou deux lèvres d'étanchéité (8, 9) disposées face à face.

7. Clapet anti-retour d'air selon l'une quelconque des revendications précédentes, caractérisé par un cadre périphérique (38) comprenant des clapets de fermeture individuels (33), ces clapets de fermeture individuels (33) étant respectivement reliés par des charnières constituées par des membranes (17) avec le cadre périphérique (38) qui est fixé de son côté sur le logement (2) par au moins une charnière constituée par une membrane (29) ainsi que par des tenons (30, 34, 35) et des ouvertures (31, 36, 37).
